# EUROPÄISCHE PATENTSCHRIFT

(11) **EP 1 993 893 B1**
(45) Veröffentlichungstag und Bekanntmachung des Hinweises auf die Patenterteilung: **19.05.2010**
(21) Anmeldenummer: 07723099.3
(22) Anmeldetag: 08.03.2007
(51) Int. Cl.: B60T 17/02, F04B 39/12, F16M 1/00, F01P 11/04, F04B 41/00

(54) **KOMPRESSORANORDNUNG**
COMPRESSOR ASSEMBLY
SYSTEME COMPRESSEUR

(30) Priorität: 08.03.2006 DE 102006010723
(43) Veröffentlichungstag der Anmeldung: 26.11.2008
(73) Patentinhaber: KNORR-BREMSE Systeme für Schienenfahrzeuge GmbH, 80809 München (DE)
(72) Erfinder: KOECK, Engelbert, 82152 Planegg (DE); MENDEL, Juergen, 85250 Altomünster (DE)
(74) Vertreter: Schönmann, Kurt
(86) Internationale Anmeldenummer: PCT/EP2007/002004
(87) Internationale Veröffentlichungsnummer: WO 2007/101684

(56) Entgegenhaltungen:
- EP-A2- 1 031 727
- WO-A-01/49172
- WO-A-02/44003
- DE-C1- 10 045 597
- FR-A- 2 798 345
- FR-A1- 2 766 878
- FR-A3- 2 559 553

## Beschreibung

Die vorliegende Erfindung betrifft eine Kompressoranordnung, bevorzugt zur Integration in einem Schienenfahrzeug zum Betrieb diverser Druckluftverbraucher, mit einer Mehrzahl von Komponenten, zumindest umfassend einen Antrieb sowie einen mittels des Antriebs betriebenen Verdichter zur Verdichtung der Druckluft.

Derartige Kompressoranordnungen mit besonderer Eignung für die Erfordernisse bei der Integration in Schienenfahrzeuge sind hinreichend bekannt. Diese sind häufig als Schraubenverdichter ausgeführt, um das Schienenfahrzeug mit Druckluft zu versorgen, um beispielsweise ein druckluftbetriebenes Bremssystem zu speisen. Derzeit werden im Bahnbereich entweder modifizierte Industriekompressoren als kompakter Anlagenbau mit über Rohre verbundenen Komponenten verwendet, oder es kommen Einschubeinheiten zum Einsatz, welche beispielsweise als integrierte Guss- oder Schweißgehäuse ausgeführte Kompressoren aufweisen. Insbesondere bei den mit Guss- oder Schweißgehäuse ausgeführten Kompressoren wird entweder der eigentliche Schraubenverdichterblock in einen dafür vorgesehenen Hohlraum eingeschoben und ein Teil der weiteren, für die Funktion des Verdichters notwendigen Komponenten in das Verdichtergehäuse mit integriert.

Aus der DE 100 58 923 A1 ist eine Kompressoranordnung bekannt, welche insbesondere für den Einsatz in einem Schienenfahrzeug zur Druckluftbeschaffung vorgesehen ist. Aufgrund der Anordnung eines Antriebes, welcher endseitig am Kompressor angeflanscht ist, sowie weiterer am Kompressorgehäuse angeordneter Komponenten weist der Kompressor eine nur geringe Flexibilität hinsichtlich der Anpassung an unterschiedliche Bauräume, Einsatzzwecke oder Ausführungsformen auf. Zusätzlich sind externe Verrohrungen, Verkabelungen und Schlauchverbindungen notwendig, um Einzelkomponenten fluidisch oder elektrisch miteinander zu verbinden.

Aus der WO 01/49172 A1 geht eine Kompressoranordnung in Form einer Pumpe hervor, die Bestandteil eines Blutdruckmessgeräts ist. Bei dieser Kompressoranordnung wird von einem funktionsintegrierten Gehäuse Gebrauch gemacht, welches von einem Kanalsystem durchzogen ist und insofern nicht allein eine mechanische Befestigungsfunktion ausübt. Dies spart zumindest ein Teil der ansonsten erforderlichen externen Verrohrung ein.

Die FR 2 559 553 offenbart eine Kompressoranordnung zur Befüllung der Druckluftanlage eines Fahrzeugs, welche mit ihren Komponenten an einer gemeinsamen Trägerplatte montiert ist. Diese Trägerplatte übernimmt jedoch keine fluidischen oder elektrischen Verbindungsfunktionen und ist auch nicht Teil des Schmiermittelkreislaufs.

Die FR 2 776 878 offenbart eine Anordnung von pneumatischen Komponenten, welche an einer gemeinsamen Trägerplatte montiert ist, die im Sinne einer Funktionsintegration auch fluidische Kanäle enthält. Allerdings ist der Integrationsgrad dieser Trägerplatte nicht so hoch, dass hierin auch elektrische Verbindungsmittel, geschweige denn Schmiermittelkreislaufelemente integriert sind. Ferner ist diese Trägerplatte nicht zur Befestigung eines Kompressors vorgesehen, sondern sonstiger pneumatischer Komponenten, wie Steuereinheiten, Ventile, etc.

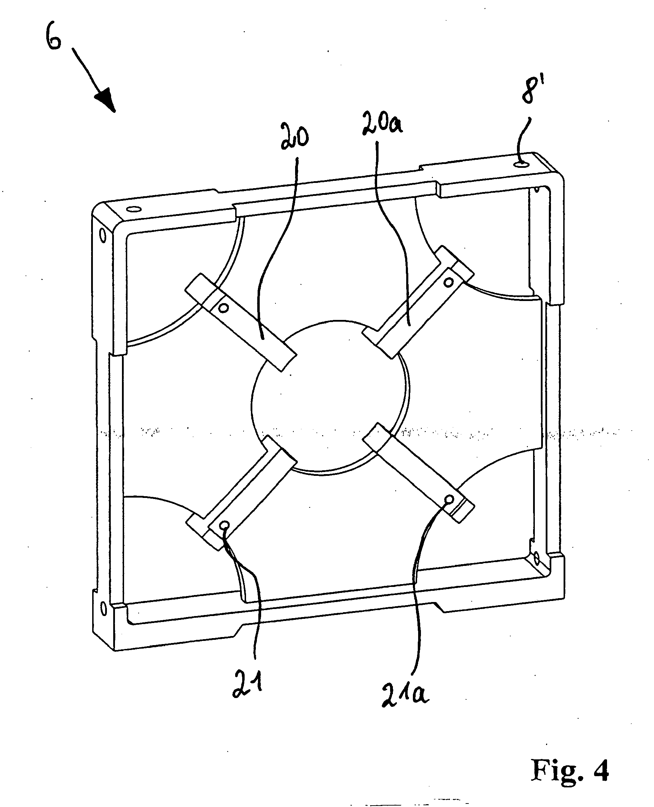

Die EP 1 031 727 A2 offenbart eine Kompressoranordnung, welche für den Schienenfahrzeugbereich zur Befüllung der Druckluftbremsanlage vorgesehen ist. Allerdings wird bei beiden Funktionsprinzipen nicht von einer mit der erfindungsgemäßen Lösung vergleichbaren funktionsintegrierten Trägerplatte Gebrauch gemacht. Zwar sind Trägerkonstruktionen vorhanden, in welche auch Druckmittelkanäle integriert sind (Figur 4), jedoch findet eine weitergehende Funktionsintegration hier nicht statt.

Es ist daher die Aufgabe der vorliegenden Erfindung, eine Kompressoranordnung zu schaffen, welche sich durch eine hohe Flexibilität zur Anpassung an einen gegebenen Bauraum auszeichnet sowie einen geringen Aufwand für die Schaffung fluidischer Verbindungen aufweist.

Diese Aufgabe wird ausgehend von einer Kompressoranordnung gemäß dem Oberbegriff des Anspruchs 1 in Vebindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass zumindest ein Teil der Komponenten mechanisch jeweils mit einer Trägerplatte verbunden ist, wobei die jeweilige mechanische Verbindung zumindest teilweise fluidische und /oder elektrische Verbindungsanschlüsse aufweist, um die auf der Trägeplatte angeordneten Komponenten über in der Trägerplatte integrierte Leitungen zu verbinden.

Diese Lösung bietet den Vorteil, dass die Trägerplatte aufgrund der platinenartigen Bauweise sowohl als Verteiler der Medienströme als auch als Träger der auf der Trägerplatte angeordneten Komponenten dient. Aufgrund der Anordnung der für den Betrieb notwendigen Komponenten auf der Trägerplatte ergibt sich eine äußerst hohe Flexibilität hinsichtlich der Anordnung der Komponenten, so dass eine Anpassung an einen vorgegebenen Bauraum möglich ist und sogar kurzfristige Anpassungen an Kundenwünsche auch ohne eine Änderung des Kompressorgehäuses möglich ist. Der Verdichter kann dabei als Schraubenkompressor ausgeführt sein, welcher unabhängig von der Ausführungsform der Kompressoranordnung einheitlich aufgebaut sein kann. Daraus ergibt sich eine Reduktion der Anzahl der die Vorrichtung bildenden Teile, da sich die Möglichkeit ergibt, verschiedene Komponenten in unterschiedlichen Kombinationen auf ein und derselben Trägerplatte anzuordnen, um somit eine für entsprechende Einsatzwecke äußerst große Variantenvielzahl bei gleichzeitig vergleichsweise kleinem Grundbauteilestamm zu erzielen.

Darüber hinaus stellt die Trägerplatte nicht nur die mechanischen Schnittstellen für die Komponenten zur Verfügung, sondern verteilt aufgrund der fluidischen Verbindung den Fluss der einzelnen Medien, welche hier insbesondere die Druckluft und das Kompressoröl betreffen, welches von einer Komponente zur nächsten in geeigneter Weise geleitet wird, wodurch externe Verrohrungen sowie Schlauchverbindungen zumindest größtenteils entfallen. Damit werden zusätzliche Dichtstellen, die Teileanzahl und die Montagezeiten eingespart bzw. reduziert, was die Zuverlässigkeit sowie eine wirtschaftliche Ausführung des Systems weiter verbessert.

Die Komponenten der Vorrichtung betreffen insbesondere den als Schraubenkompressor ausgeführten Verdichter, einen Antrieb, welcher den Verdichter entweder über eine direkte Welle-zu-Welle- Kupplung, über einen Riementrieb oder eine sonstige Getriebestufe antreibt, wobei insbesondere zwischen einem ölgeschmierten Verdichter und einem ölfreien Verdichter unterschieden werden kann. Im Anwendungsfall eines ölgeschmierten Verdichters ist weiterhin eine Ölversorgung notwendig, welche aus einer Vielzahl von Einrichtungen aufgebaut ist, welche ebenfalls auf der Trägerplatte angeordnet werden können. Der Antrieb kann entweder als elektrischer Antrieb ausgeführt sein oder einen sonstigen mechanischen oder fluidischen Antrieb umfassen. Grundsätzlich erscheint diese Anordnung auch für andere Rotationsverdichter sinnvoll, könnte mit Modifikationen aber auch bei Hubkolbenkompressoren zur Anwendung kommen.

Die Komponenten der Vorrichtung können dabei entweder auf einer Planseite der Trägerplatte angeordnet sein, oder auf beiden Planseiten der Trägerplatte verteilt angeordnet werden. Die Trägerplatte ist vorzugsweise rechteckig, insbesondere quadratisch ausgeführt, wobei der Antrieb eine separate Antriebsträgerplatte aufweisen kann. Da die Trägerplatte und die Antriebsträgerplatte jeweils seitliche Bohrungen oder dergleichen für Befestigungselemente aufweisen, können diese variabel miteinander verbunden werden. Aufgrund einer beispielsweise quadratischen Ausführung der Trägerplatte kann im Sinne einer flexiblen Anordnung der Einzelkomponenten der Vorrichtung zueinander die Antriebsträgerplatte des Antriebs an allen vier verschiedenen Seiten angeordnet und über Befestigungselemente an der Trägerplatte befestigt werden. Dabei ist vorzugsweise die Trägerplatte sowie die Antriebsträgerplatte in einer Ebene angeordnet, wobei der Antrieb des Verdichters durch den elektrischen Antriebsmotor über eine Riemenverbindung oder dergleichen realisiert werden kann. Alternativ kann der Motor auf der der Anordnung des Verdichters gegenüberliegenden Seite auf der Trägerplatte montiert werden, wobei die Antriebswelle bzw. die Kupplungsverbindung zwischen dem Antrieb und dem Verdichter durch die Trägerplatte hindurchgeführt wird. Grundsätzlich kann der Aufbau aus einer einzigen oder beliebig vielen Trägerplatten bestehen, die jede erdenkliche Form, Verbindungsart und Position zueinander einnehmen können. Weiterhin kann die Trägerplatte selbst auf die verschiedensten Arten hergestellt werden, beispielsweise als Gussteil, geschweißte, geklebte, intern verrohrte, verlötete oder anderweitig gefügte Konstruktion. Bei einer Anordnung, bei der die Trägerplatte sowie die Antriebsträgerplatte in einer Ebene nebeneinander vorgesehen sind, können insbesondere Schraubenverbindungen verwendet werden, welche durch die Befestigungsbohrungen, welche sich am Seitenrand der jeweiligen Platten befinden können, hindurchgeführt werden. Ferner kann die Trägerplatte bei übersetzten Antrieben auch zumindest teilweise Funktionen des Getriebegehäuses (Schmierung) oder eines Riementriebs (Schutz des Betriebers) übernehmen.

Die Trägerplatte weist integrierte Verbindungsleitungen auf, um entweder verschiedenen Medien, wie Druckluft oder Öl bzw. Ölnebel für den Verdichter zu leiten oder um elektrische Verbindungen aufzunehmen. Damit entfallen Verrohrungen sowie Schlauchverbindungen zwischen den Komponenten der Vorrichtung, da diese zumindest teilweise in der Trägerplatte integriert sind. Die mechanischen Anschlüsse auf der Trägerplatte für die einzelnen Komponenten der Vorrichtung umfassen zunächst Befestigungsmöglichkeiten wie Gewindebohrungen, Durchgangsbohrungen oder sonstige Verbindungsmittel, wobei weiterhin Anschlüsse bzw. innenliegende Konturen vorgesehen sind, um eine Fluidleitung zu ermöglichen. Darüber hinaus können in der Trägerplatte spanend bearbeitete Geometrien vorgesehen sein, um passgenaue Aufnahmemöglichkeiten der Komponenten zu schaffen, so dass diese zugleich mit einem Dichtmittel abgedichtet werden können. Somit können beispielsweise eine Ölvorabscheidung und /oder eine Ölfeinabscheidung als weitere Komponenten in/auf der Trägerplatte angeordnet werden, wobei diese separat in der Trägerplatte integriert und fluidisch über die Trägerplatte mit zumindest einer der Komponenten verbunden ist. Diese werden direkt auf der Trägerplatte befestigt, wobei die Fluidverbindung an der Flanschseite der Trägerplatte oder Ölvorabscheidung bzw.

Ölfeinabscheidung hergestellt wird. Durch das Anflanschen der Abscheidevorrichtungen entsteht ein geschlossener Vorabscheideraum, wobei beispielsweise zur Befestigung bzw. zur Aufnahme von sog. Raschigringen, Filterelemente oder Sieben entsprechende Vertiefungen in der Trägerplatte eingearbeitet sind. Damit kann das Luftgemisch in die Abscheidevorrichtung einströmen, wobei nach der Abscheidung des Öls die gereinigte Luft wiederum in der Trägerplatte weitergeleitet wird. Das abgeschiedene Öl kann mittels eines separaten Kanals in der Trägerplatte zu einem Ölbehälter geleitet werden. Die Abscheideeinrichtung kann ferner auch komplett angegossen oder in anderer geeigneter Weise angebracht werden. Eine Anpassung an verschiedene Volumenströme des Verdichters kann beispielsweise durch Anpassung des Abscheideraumes geschehen.

Als eine weitere, die Erfindung verbessernde Maßnahme wird vorgeschlagen, dass die Kompressoranordnung eine Öltemperaturregeleinrichtung umfasst, wobei diese separat in der Antriebsträgerplatte integriert und fluidisch und / oder elektrisch über die Trägerplatte mit zumindest einer der Komponenten verbunden ist. Die Öltemperaturregeleinrichtung kann als Ölthermostat ausgeführt sein, welche vorzugsweise außenseitig an der Trägerplatte einschraubbar ist, wobei der Fluidstrom des Öls innenliegend in der Trägerplatte am Thermostat vorbeiströmt. Somit ist keine separate Vorrichtung zur Aufnahme des Ölthermostats notwendig, da dieses direkt an/in der Trägerplatte befestigt werden kann. Ein sich daraus ergebender Vorteil ist zudem die Zugänglichkeit des Ölthermostats von der Außenseite der Vorrichtung, woraus sich eine hohe Wartungsfreundlichkeit ergibt.

Aus konstruktiven Gründen ist es von besonderem Vorteil, dass weiterhin eine Elektronikeinrichtung in der Vorrichtung selbst vorgesehen ist, welche in der Trägerplatte integriert ist oder separat an der Trägerplatte angeordnet wird, wobei zumindest die elektrischen Verbindungen in der Trägerplatte integriert oder zumindest über der Trägerplatte angeordnet sind. Die Elektronikeinrichtung kann in einem Klemmenkasten integriert werden, welcher als innenliegende Aussparung in der Trägerplatte vorgesehen werden kann. Somit können neben fluidischen Verbindungen in der Trägerplatte auch elektrische Leitungen innenliegend vorgesehen werden, um eine externe Verschaltung der Komponenten einzusparen. Der Klemmenkasten kann dabei die vorzugsweise einzige elektrische Schnittstelle zur Verbindung externer Leistungs- bzw. Signalanschlüssen darstellen. Neben den Anschlüssen bzw. der Steuerung für den elektrischen Antrieb können weitere elektronische Vorrichtungen vorgesehen sein, welche beispielsweise einen Softstarter oder einen Frequenzumrichter bzw. Teile davon umfassen können, wobei aufgrund der Integration jeweils ein eigenes Gehäuse, zusätzliche Befestigungsteile bzw. Kabelschächte etc. entfallen. Ebenso besteht die Möglichkeit, Elektronikkomponenten zur Steuerung des Betriebsverhaltens oder aber zur Funktionsdiagnose der Vorrichtung zu integrieren. Diese kann ggf. auch eine Ausgabeeinheit enthalten, welche ebenfalls in der Trägerplatte integriert oder auf dieser angebracht ist. Aufgrund der Tatsache, dass sämtliche Komponenten auf der Trägerplatte mittels eines direkten Kontaktes angebracht sind, ergibt sich der weitere Vorteil eines Entfalls separater Erdungseinrichtungen.

Als weitere Komponente kann die Vorrichtung einen Wärmetauscher umfassen, welcher mechanisch an der Trägerplatte befestigt ist. Damit ist lediglich eine Ausführungsvariante gegeben, wobei der Wärmetauscher ebenfalls endseitig am elektrischen Antrieb, seitlich am elektrischen Antrieb oder zwischen dem elektrischen Antrieb und der Trägerplatte entweder in radialer oder axialer Lüfterbauweise angeordnet werden kann. Der Wärmetauscher dient dabei der Kühlung des Verdichters, in dem die Druckluft und /oder das Öl durch einen konvektiven Wärmestrom oder dergleichen gekühlt wird. Die fluidischen Anschlüsse des Wärmetauschers können abhängig vom Ort der Anordnung auch unmittelbar über die mechanischen Anschlüsse des Wärmetauschers mit der Trägerplatte realisiert werden.

Als Alternative zum separat ausgeführten Wärmetauscher kann die Trägerplatte eine Verrippung oder dergleichen aufweisen, durch welche die Funktion eines Wärmetauschers gebildet wird. Die Rippen können aufgegossen werden oder als aufgebrachte Blechelemente ausgeführt sein. Damit kann der Bauraum weiter reduziert werden, wobei durch den Entfall eines separaten Wärmetauschers die Anzahl der Einzelbauteile reduziert wird. Nach einer möglichen Weiterbildung der Erfindung wird vorgeschlagen, dass die Trägerplatte Anschlüsse für zumindest einen Ölvorratsbehälter und /oder Ölabscheidebehälter aufweist. Auch hier können die Anschlüsse wieder sowohl als mechanische Anschlüsse als auch als fluidische Anschlüsse ausgeführt werden, so dass das Öl direkt in den Behälter geleitet wird.

Die Anschlussstelle auf der Trägerplatte, welche den Ölbehälter aufnimmt, kann dabei eine Vielzahl von Bohrungen für Befestigungen aufweisen, wobei zugleich ein Ölzulauf sowie ein Ölablauf vorgesehen werden kann, welcher durch die Verbindung unmittelbar dicht mit der Oberfläche der Trägerplatte eine Fluidverbindung bildet. Dabei kann ein vorheizbares Reservoir an Öl in der Trägerplatte vorgesehen sein, um für den Start des Verdichters die Betriebssicherheit bei niedrigen Temperaturen zu erhöhen. Weiterhin kann durch das vorheizbare Reservoir das Ölwechselintervall verlängert werden, wobei die Vorheizung in der Trägerplatte integriert ist. Des Weiteren ließe sich auch eine elektrische Vorheizung insbesondere für das Verdichteröl so integrieren, dass zum Beispiel eine separate Abdichtung aufgrund des Wegfalls der direkten Einbringung des Heizelements ins Öl entfällt. Die Heizung könnte sich auch im Ölvorratsbehälter befinden.

Vorteilhafterweise bildet die Trägerplatte an der mechanischen Verbindungsstelle zum Verdichter zumindest einen Teil des Gehäuses des Verdichters. Dabei können Teile des Gehäuses der eigentlichen Schraubenverdichtereinheit selbst in der Trägerplatte integriert werden. Dies bedeutet zwar einerseits einen Verlust der hier besonders gewünschten Flexibilität, ermöglicht jedoch andererseits eine weitere Reduzierung von Schnittstellen und eine Gewichtsreduzierung.

Weitere für einen Schraubenverdichter übliche Komponenten, wie ein Ansaugluftfilter, ein Ansaugrückschlagventil, ein Ansaugregler, ein Entlastungsventil, ein Mindestdruckventil zur Aufrechterhaltung des Ölkreislaufs, ein Sicherheitsventil sowie schalldämpfende Maßnahmen am Luftein-/auslass können ebenfalls an/in der Trägerplatte angebracht werden. Auch hier ergeben sich Einsparungen an Zuleitungen, Baugröße und Gewicht.

Zusätzlich zu den Grundfunktionen des Verdichters können auch Aufgaben der Luftaufbereitung integriert bzw. auf der Trägerplatte angebracht werden. Hier sind besonders eine Grobvorabscheidung von Wasser bzw. Öl nach dem Verdichtungsvorgang und vor einem Trockner zu nennen. Dabei kann die Trägerplatte auch als Lufttrocknerträgerplatte dienen, auf die beispielsweise Behälter mit dem Trockenmittel direkt aufgebracht oder integriert werden. Weitere Lufttrocknerfunktionen wie Ventile und eine Beheizung sowie Steuerungselektronik des Trockners können ebenso direkt auf der Trägerplatte eingebracht bzw. aufgesetzt werden, wodurch sich wiederum separate Gehäuse einsparen lassen. Selbst wenn eine komplette Lufttrocknereinheit angebracht wird, ergibt sich der Vorteil der Ersparnis separater Befestigungsvorrichtungen.

Die auf der Trägerplatte ferner auch angebrachten Ventile für den Verdichter können Mindestdruckventile zur Aufrechterhaltung eines Mindestöldruckes und /oder zumindest Ansaugrückschlagventile umfassen.

Bei der Montage der Gesamtanlage ergibt sich weiterhin der Vorteil, dass die Trägerplatte als Fuß /Aufhängung dient und somit keine separaten Befestigungsteile mehr benötigt werden. Weiterhin entfällt ein eigener Rahmen bzw. Träger, da die Trägerplatte bereits als solcher dient. Die so entstandene Kompressoranordnung kann weiterhin besonders einfach mit einer Kapsel oder einer Abdeckung versehen werden, wobei diese aus ästhetischen oder schalltechnischen Gründen vorgesehen sein kann, und wobei die Trägerplatte mit oder ohne Trägerplatte teilweise oder ganz die Funktion einer Unterkonstruktion oder gar einer Seitenwand derselben übernehmen kann.

Die genannten Integrationsmöglichkeiten mit entsprechend zugeordneten Vorteilen gelten hinsichtlich der vorliegenden Erfindung auch für trockenlaufende Schraubenverdichter, wobei diese ein-, zwei- oder mehrstufig ausgeführt sein können sowie auch für mit anderen Einspritzmedien, wie zum Beispiel Wasser betriebene Verdichter. Dabei entfallen lediglich die sich speziell aufgrund der Ausführung als öleingespritzte Maschine ergebenden Gegebenheiten /Funktionen, wie beispielsweise eine Ölabscheidung, ein großer Ölvorrat, etc.

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1a: eine perspektivische Ansicht einer Verdichteranordnung mit einem elektrischen Antrieb, welcher auf einer Trägerplatte angeordnet ist sowie einem Verdichter, welcher auf einer Trägerplatte angeordnet ist;
- Fig. 1b: eine perspektivische Ansicht einer weiteren Ausführungsform einer Verdichteranordnung mit einem elektrischen Antrieb, welcher auf einer Trägerplatte angeordnet ist sowie einem gegenüberliegend angeordneten Verdichter;
- Fig. 2: eine perspektivische Ansicht der Trägerplatte von der Befestigungsrichtung der Kompressoranordnung;
- Fig. 3: eine perspektivische Ansicht der Trägerplatte aus Fig. 2 in einer rückseitigen Ansicht;
- Fig. 4: eine perspektivische Ansicht der Trägerplatte zur Aufnahme des elektrischen Antriebs, und
- Fig. 5: eine Draufsicht einer mechanisch-fluidischen Verbindungsstelle der Trägerplatte zur Aufnahme einer Ölvorabscheidung.

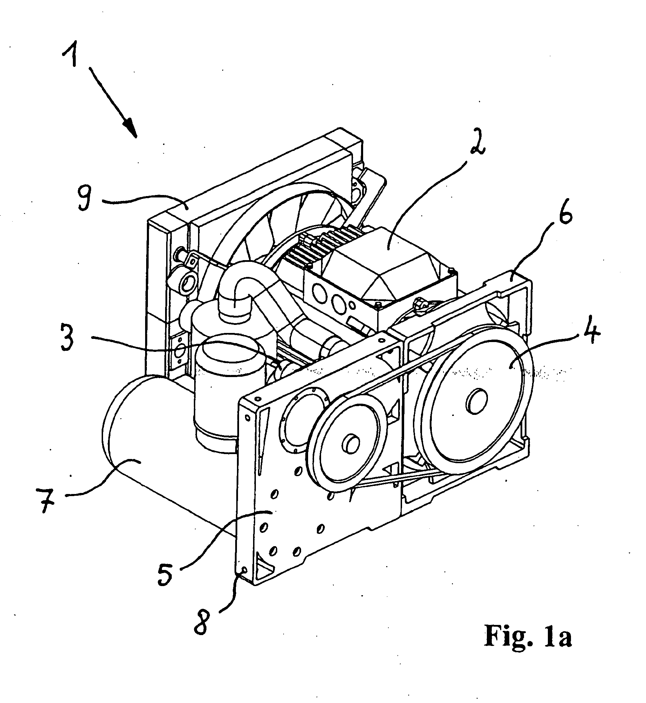

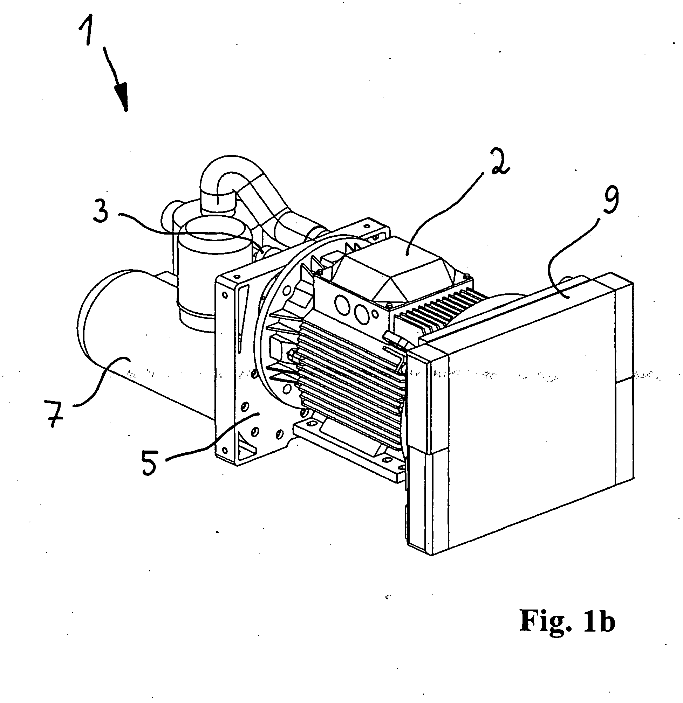

Die in der Fig. 1 a perspektivisch dargestellte Kompressoranordnung 1 ist mit den wesentlichen Komponenten abgebildet, so wie sie als Einschubmodul beispielsweise in einem Schienenfahrzeug eingebaut und in Betrieb genommen werden kann. Die Kompressoranordnung 1 umfasst dabei einen Antrieb 2, welcher gemäß dem vorliegenden Ausführungsbeispiel als elektrischer Antrieb ausgeführt ist. Zur Verdichtung der Druckluft ist benachbart zum Antrieb 2 ein Verdichter 3 angeordnet, welcher als Schraubenkompressor ausgeführt ist, wobei die Übertragung der mechanischen Antriebsbewegung mittels eines Riementriebs 4 vorgenommen wird. Die Träger- bzw. Rahmenkonstruktion der Vorrichtung 1 wird durch eine Trägerplatte 5 sowie durch eine Antriebsträgerplatte 6 gebildet. Die Trägerplatte 5 dient zur Aufnahme diverser Verdichterkomponenten wie beispielsweise den Verdichter 3 oder einem Ölvorratsbehälter 7, wohingegen die Antriebsträgerplatte 6 zur mechanischen Aufnahme des Antriebs 2 dient. Die Trägerplatte 5 sowie die Antriebsträgerplatte 6 sind rechteckig bzw. quadratisch ausgeführt, wobei beide Platten 5, 6 über eine jeweilige Seitenfläche miteinander in Verbindung stehen. Gemäß den vorliegenden Ausführungsbeispiel ist die Trägerplatte 5 mittels Befestigungselementen -hier nicht dargestellt- an der Antriebsträgerplatte 6 befestigt, wobei die Befestigungselemente durch Befestigungslöcher 8 hindurchgeführt sind. Da an allen vier Seitenflächen der Trägerplatten 5 Befestigungslöcher 8 vorgesehen sind, kann die Antriebsträgerplatte 6 von jeder beliebigen Richtung an der Trägerplatte 5 befestigt werden, so dass in Abhängigkeit des gegebenen Einbauraums der Vorrichtung 1 eine Anpassung des Grundaufbaus möglich ist. Sowohl die Komponenten der Verdichterseite, welche auf der Trägerplatte 5 angeordnet sind, als auch der auf der Antriebsträgerplatte 6 angeordnete Antrieb 2 sind auf der gleichen Planseite der jeweiligen Platte 5, 6 befestigt, wohingegen der Riementrieb 4 auf der gegenüberliegenden Seite angeordnet ist. Dabei sind die Wellen des Antriebs 2 sowie des Verdichters 3 als Durchtrieb durch die Trägerplatte 5 bzw. die Antriebsträgerplatte 6 ausgeführt, wobei der Riementrieb auf der gegenüberliegenden Seite mittels eines - nicht dargestellten - Gehäuses verschließbar ist.

Rückseitig am Antrieb 2 ist ein Wärmetauscher 9 vorgesehen, dessen Ventilator ebenfalls auf der Antriebswelle des Antriebs 2 befestigt ist und somit angetrieben wird. Der Wärmetauscher 9 ist mittels eins Ventilators so ausgestaltet, dass der Ventilator sowohl einen Konvektionsstrom im Wärmetauscher 9 selbst erzeugt als auch den Antrieb 2 kühlt. Die zu kühlenden Medien können sowohl die Druckluft als auch das zum Betrieb des Verdichters 3 notwendige Öl sein.

Fig. 1b zeigt die Ansicht einer weitern Ausführungsform einer Verdichteranordnung mit einem elektrischen Antrieb 2 und einem nachfolgend montierten Wärmetauscher 9, wobei der Antrieb 2 jedoch direkt auf der Trägerplatte 5 angeordnet ist. Der Verdichter 3 ist gegenüberliegend montiert, sodass die Antriebsträgerplatte 6 entfällt. Die Trägerplatte 5 nimmt somit alle wesentlichen Komponenten auf, wobei der Antrieb des Verdichters 3 mittels einer durch die Trägerplatte 5 hindurch verlaufenden Antriebswelle erfolgt.

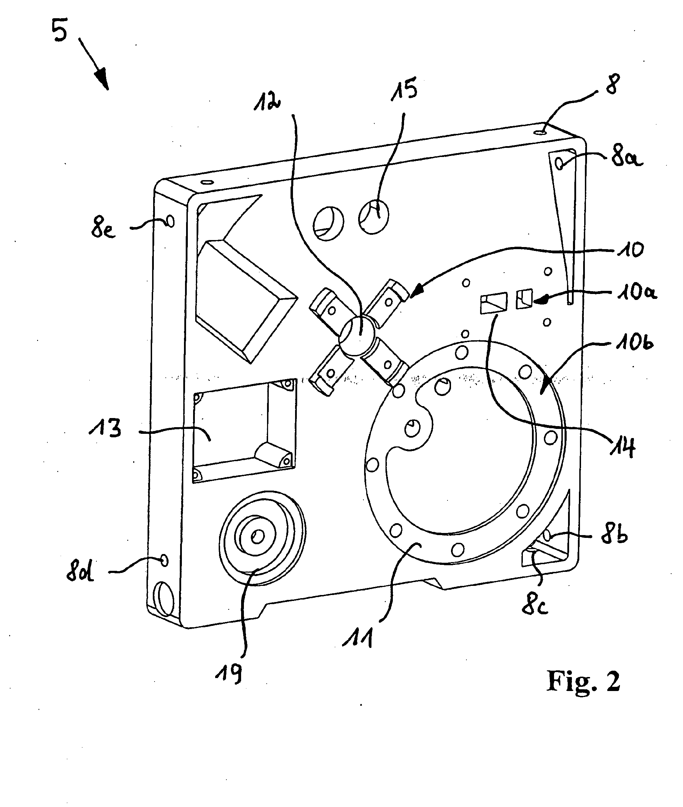

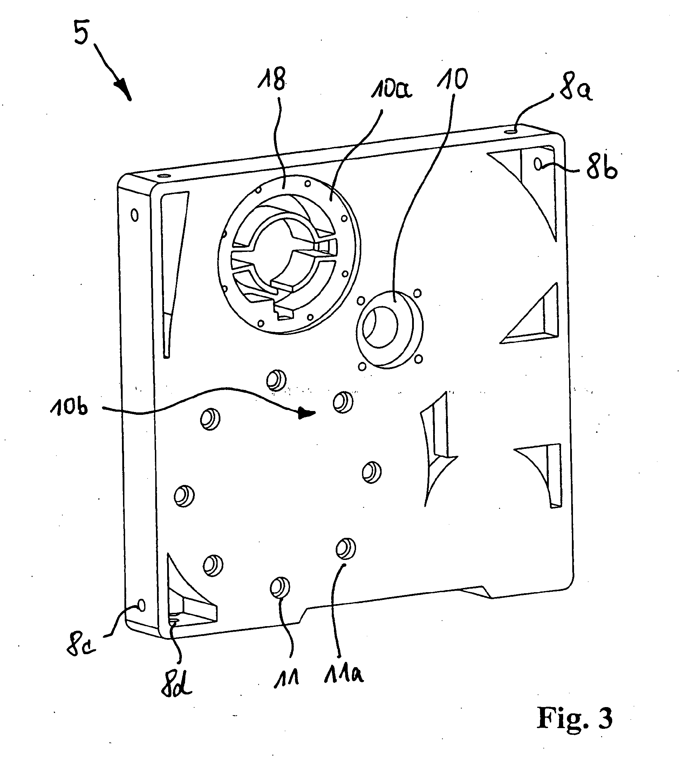

In Fig. 2 sowie in Fig. 3 ist die Trägerplatte 5 perspektivisch dargestellt, wobei diese in Fig. 2 von der Befestigungsseite der Verdichterkomponenten wie dem Verdichter 3 dargestellt ist, wohingegen in Fig. 3 die Trägerplatte 5 von der Befestigungsseite des Antriebs 2 dargestellt ist. Die Befestigungsplatte 5 weist eine Vielzahl von Verbindungsanschlüssen 10 auf, welche neben einer mechanischen Verbindung der einzelnen Komponenten zur Trägerplatte 5 ebenso fluidische Verbindungen umfassen. Die Verbindungsanschlüsse 10 sind derart ausgestaltet, dass entsprechend der zu verbindenden Komponenten Verbindungsmerkmale in der Trägerplatte 5 eingearbeitet sind, so dass beispielsweise ein Ölbehälteranschluss 11, ein Verdichteranschluss 12, ein Klemmkastenanschluss 13 zur Verbindung elektrischer Leitungen, ein Ölfeinabscheideanschluss 14, ein Mindestdruckventilanschluss 15, ein variabler Anschluss 16 sowie ein Ölthermostatanschluss 17 vorgesehen ist. Der Verdichteranschluss 12 entspricht in Fig. 3 dem Anschluss für den Antrieb 2 - hier nicht dargestellt -, wobei gemäß dem vorliegenden Ausführungsbeispiel die Antriebswellen des Antriebs sowie des Verdichters eine direkte Verbindung umfassen, ohne einen Riementrieb vorzusehen. Neben weiteren Anschlüssen wie einem Ölanschluss 19 zur Aufnahme eines Filters (Fig. 2) sowie einem Ölvorabscheideraumanschluss 18 (Fig. 3) sind weitere - hier nicht näher bezeichnete - Anschlüsse zur Aufnahme verschiedener fluidischer, mechanischer oder elektrischer Komponenten vorgesehen. Die Trägerplatte 5 weist an den Seitenflächen Befestigungslöcher 8 auf, welche zur mechanischen Befestigung der Antriebsträgerplatte 6 vorgesehen sind, so dass durch die Befestigungslöcher 8 Verbindungselemente wie Schrauben o.ä. hindurchgeführt werden können. Aufgrund der jeweiligen Befestigungslöcher an jeder der Seiten der Trägerplatte 5 kann die Antriebsträgerplatte 6 von jeder Richtung an der Trägerplatte 5 montiert werden.

Die Antriebsträgerplatte 6 ist in Fig. 4 dargestellt und dient insbesondere der Aufnahme des Antriebes 2 - hier nicht dargestellt. Die Aufnahme des Antriebs erfolgt über eine Motorzentrierung 20, welche mittels radial nach innen gerichteten beweglichen Zentrierelementen den Antrieb in einer gewünschten Position aufnimmt. Diese leistenförmigen Standardelemente, welche die Motorzentrierung 20 bilden, können je nach Motorflansch entsprechend bearbeitet werden, sodass verschiedene Antriebe einsetzbar sind. Auf der Oberseite weisen die leistenförmigen Standardelemente Motorbefestigungsbohrungen 21 auf, um diesen beispielsweise durch eine Schraubenverbindung zu befestigen. Zur Reduktion von Gewicht und Material kann die Antriebsträgerplatte 6 Aussparungen aufweisen, wobei das Material beispielsweise ein Aluminium oder ein Gussmaterial umfassen kann. Wie auch die Trägerplatte weist die Antriebsträgerplatte Befestigungslöcher 8' auf, welche derart angeordnet sind, dass diese mit den Befestigungslöchern 8 der Trägerplatte fluchten, um gemeinsame Befestigungselemente zu verwenden.

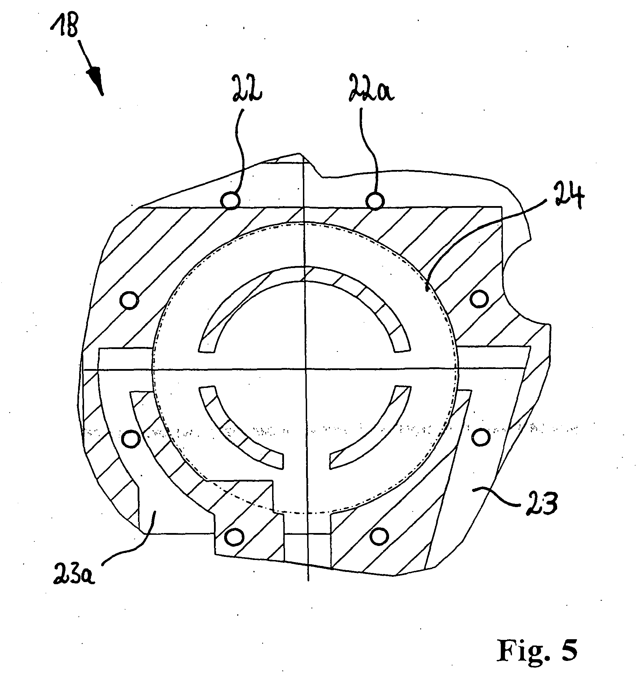

Fig. 5 zeigt einen Ölvorabscheideraumanschluss 18, welcher als Verbindungsanschluss auf der Trägerplatte 5 vorgesehen ist. Der Ölvorabscheideraumanschluss 18 umfasst neben einer mechanischen Anschlussbefestigung 22 Fluidkanäle 23 (durch Schnitt sichtbar), welche innenliegend in der Trägerplatte eingearbeitet sind. Damit wird die Möglichkeit geschaffen, eine Ölvorabscheidung innerhalb der Vorrichtung 1 vorzusehen, ohne externe bzw. freiliegende Rohr- bzw. Schlauchverbindungen zu verwenden. Das abgeschiedene Öl kann innerhalb der Trägerplatte beispielsweise zu einem Ölbehälter geleitet werden, wobei die in den Fluidkanal 23 einströmende Druckluft mit einem großen Ölgehalt der Ölvorabscheidung zugeführt werden kann, wobei die gereinigte Luft über einen weiteren Fluidkanal 25 zur Weiterverwendung aus dem Verbindungsanschluss heraus geleitet werden kann. Gemäß dem vorliegenden Beispiel aus Fig. 5 ist der Ölvorabscheideraumanschluss 18 für eine Ölvorabscheidung für große Volumenströme vorgesehen, wohingegen ebenfalls eine Ölvorabscheidung angeschlossen werden kann, welche für kleine Volumenströme vorgesehen ist. Innerhalb des Ölvorabscheideraumanschluss 18 kann aufgrund einer speziellen geometrischen Ausbildung der Innenkonturen eine Raschigringaufnahme 24 ausgebildet sein, wobei gemäß dem vorliegenden Ausführungsbeispiel das Gitter für einen Raschigring mit einer strichpunktierten Linie dargestellt ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. So ist es auch möglich, dass Trägerplatte (5) und Antriebsträgerplatte (6) einstückig ausgeführt werden.

### Bezugszeichenliste

- 1: Kompressoranordnung
- 2: Antrieb
- 3: Verdichter
- 4: Riementrieb
- 5: Trägerplatte
- 6: Antriebsträgerplatte
- 7: Ölvorratsbehälter
- 8, 8': Befestigungsloch
- 9: Wärmetauscher
- 10: Verbindungsanschlüsse
- 11: Ölbehälteranschluss
- 12: Verdichteranschluss
- 13: Klemmkastenanschluss
- 14: Ölfeinabscheideanschluss
- 15: Mindestdruckventilanschluss
- 16: variabler Anschluss
- 17: Ölthermostatanschluss
- 18: Ölvorabscheideraumanschluss
- 19: Ölanschluss
- 20: Motorzentrierung
- 21: Motorbefestigungsbohrung
- 22: Mechanische Anschlussbefestigung
- 23: Fluidkanal
- 24: Raschigringaufnahme

## Patentansprüche

1. Kompressoranordnung (1) zur Integration in einem Schienenfahrzeug zum Betrieb diverser Druckluftverbraucher mit einer Mehrzahl von Komponenten, zumindest umfassend einen Antrieb (2) sowie einen mittels des Antriebs (2) betriebenen Verdichter (3) zur Verdichtung der Druckluft, wobei zumindest ein Teil der Komponenten mechanisch jeweils mit einer Trägerplatte (5) verbunden ist und die jeweilige mechanische Verbindung zumindest teilweise fluidische und/oder elektrische Verbindungsanschlüsse (1'0) aufweist, um die auf der Trägeplatte (5) angeordneten Komponenten über in der Trägerplatte (5) integrierte Leitungen zu verbinden,
**dadurch gekennzeichnet, dass** eine Ölvorabscheidung und/oder eine Ölfeinabscheidung vorgesehen ist; wobei diese separat in der Trägerplatte (5) integriert und fluidisch über die Trägerplatte (5) mit zumindest einer der Komponenten verbunden ist, und dass die Trägerplatte (5) Anschlüsse für zumindest einen Ölvorratsbehälter (7) und/oder Ölabscheidebehälter aufweist.

2. Kompressoranordnung (1) nach Anspruch 1,
**dadurch gekennzeichnet, dass** die Komponenten der Vorrichtung (1) auf einer Planseite der Trägerplatte (5) angeordnet sind.

3. Kompressoranordnung (1) nach Anspruch 1,
**dadurch gekennzeichnet, dass** die Komponenten der Vorrichtung (1) auf beiden Planseiten der Trägerplatte (5) verteilt angeordnet sind.

4. Kompressoranordnung (1) nach Anspruch 1,
**dadurch gekennzeichnet, dass** die Trägerplatte (5) rechteckig ausgeführt ist und der Antrieb (2) eine separate Antriebsträgerplatte (6) aufweist, wobei die Trägerplatte (5) und die Antriebsträgerplatte (6) über jeweilige Seitenflächen über Befestigungslöcher (8) variabel miteinander verbindbar sind.

5. Kompressoranordnung (1) nach einem der vorgenannten Ansprüche,
**dadurch gekennzeichnet, dass** eine Öltemperaturregeleinrichtung vorgesehen ist, wobei diese separat in der Antriebsträgerplatte (6) integriert oder auf/an dieser angebracht ist und fluidisch und/oder elektrisch über die Trägerplatte (5) mit zumindest einer der Komponenten verbunden ist.

6. Kompressoranordnung (1) nach einem der vorgenannten Ansprüche,
**dadurch gekennzeichnet, dass** eine Elektronikeinrichtung vorgesehen ist, welche in der Trägerplatte (5) integriert ist oder separat an der Trägerplatte (5) angeordnet ist, wobei zumindest die elektrischen Verbindungen in der Trägerplatte (5) integriert und/oder über der Trägerplatte (5) angeordnet sind.

7. Kompressoranordnung (1) nach einem der vorgenannten Ansprüche,
**dadurch gekennzeichnet, dass** ein Wärmetauscher (9) integriert ist, welcher mechanisch an der Trägerplatte (5) und/oder rückseitig am Antrieb (2) lösbar befestigt ist.

8. Kompressoranordnung (1) nach Anspruch 7,
**dadurch gekennzeichnet, dass** die Trägerplatte (5) eine Verrippung aufweist, durch welche die Funktion eines Wärmetauschers gebildet ist.

9. Kompressoranordnung (1) nach einem der vorgenannten Ansprüche,
**dadurch gekennzeichnet, dass** die Trägerplatte (5) an der mechanischen Verbindungsstelle des Verdichters (3) zumindest einen Teil eines Gehäuses des Verdichters (3) bildet.

10. Kompressoranordnung (1) nach einem der vorgenannten Ansprüche,
**dadurch gekennzeichnet, dass** die Trägerplatte (5) Verbindungsmittel zur Aufnahme eines Lufttrockners aufweist oder Teile eines solchen oder ein solcher an sich integriert ist.

11. Kompressoranordnung (1) nach einem der vorgenannten Ansprüche,
**dadurch gekennzeichnet, dass** auf der Trägerplatte (5) Ventile angeordnet sind, wobei die Ventile zumindest ein Mindestdruckventil zur Aufrechterhaltung eines Schmier/Kühlmittelkreislaufs und /oder zumindest ein Sicherheitsventil umfassen.

12. Kompressoranordnung (1) nach einem der vorgenannten Ansprüche,
**dadurch gekennzeichnet, dass** diese ein Gehäuse umfasst, welches die auf der Trägerplatte (5) angeordneten Komponenten insgesamt kapselt.

13. Kompressoranordnung (1) nach einem der vorgenannten Ansprüche,
**dadurch gekennzeichnet, dass** elektrische Einrichtungen in der Trägerplatte (5) integriert sind.

## Claims

1. A compressor assembly (1) for integration into a rail vehicle for operating various compressed air consumers, having a plurality of components, at least comprising a drive (2) and a compressor (3) which is operated by means of the drive (2) and has the purpose of compressing the compressed air, wherein at least some of the components are mechanically connected to one support plate (5) each, and the respective mechanical connection is provided at least in part with fluidic and/or electrical connections (10) in order to connect the components which are arranged on the support plate (5) using lines which are integrated into the support plate (5), **characterized in that** an oil pre-separator and/or an oil fine separator are provided, wherein the latter are integrated separately into the support plate (5) and are fluidically connected via the support plate (5) to at least one of the components, and **in that** the support plate (5) has connections for at least one oil reservoir container (7) and/or oil separation container.

2. The compressor assembly (1) as claimed in claim 1, **characterized in that** the components of the device (1) are arranged on a plane side of the support plate (5).

3. The compressor assembly (1) as claimed in claim 1, **characterized in that** the components of the device (1) are arranged distributed on both plane sides of the support plate (5).

4. The compressor assembly (1) as claimed in claim 1, **characterized in that** the support plate (5) is of rectangular design, and the drive (2) has a separate drive support plate (6), wherein the support plate (5) and the drive support plate (6) can be connected to one another in a variable fashion by means of respective side faces via attachment holes (8).

5. The compressor assembly (1) as claimed in one of the abovementioned claims, **characterized in that** an oil temperature control device is provided, wherein the latter is integrated separately into the drive support plate (6) or is provided on or at the latter and is fluidically and/or electrically connected via the support plate (5) to at least one of the components.

6. The compressor assembly (1) as claimed in one of the abovementioned claims, **characterized in that** an electronic apparatus is provided which is integrated into the support plate (5) or is arranged separately on the support plate (5), wherein at least the electrical connections are integrated into the support plate (5) and/or are arranged above the support plate (5).

7. The compressor assembly (1) as claimed in one of the abovementioned claims, **characterized in that** a heat exchanger (9) is integrated, said heat exchanger (9) being mechanically attached to the support plate (5) and/or to the rear of the drive (2) in a detachable fashion.

8. The compressor assembly (1) as claimed in claim 7, **characterized in that** the support plate (5) has ribbing through which the function of a heat exchanger is formed.

9. The compressor assembly (1) as claimed in one of the abovementioned claims, **characterized in that** the support plate (5) forms at least part of a housing of the compressor (3) at the mechanical connecting point of the compressor (3).

10. The compressor assembly (1) as claimed in one of the abovementioned claims, **characterized in that** the support plate (5) has connecting means for receiving an air dryer or parts thereof or such an air dryer per se is integrated.

11. The compressor assembly (1) as claimed in one of the abovementioned claims, **characterized in that** valves are arranged on the support plate (5), wherein the valves comprise at least a minimum pressure valve for maintaining a circulation of lubricant and/or coolant and/or at least one safety valve.

12. The compressor assembly (1) as claimed in one of the abovementioned claims, **characterized in that** the latter comprises a housing which encapsulates all of the components arranged on the support plate (5).

13. The compressor assembly (1) as claimed in one of the abovementioned claims, **characterized in that** electrical apparatuses are integrated into the support plate (5).

## Revendications

1. Système (1) compresseur à intégrer dans un véhicule ferroviaire pour faire fonctionner divers consommateurs d'air comprimé et ayant une multiplicité d'éléments, comprenant au moins un entraînement (2) ainsi qu'un compresseur (3), qui fonctionne au moyen de l'entraînement (2) et qui est destiné à la compression de l'air comprimé, au moins une partie des éléments étant assemblée mécaniquement respectivement à une plaque (5) formant support et l'assemblage mécanique respectif ayant au moins en partie des connexions (10) fluidiques et/ou électriques pour relier les éléments disposés sur la plaque (5) formant support par des lignes intégrées dans la plaque (5) formant support,
**caractérisé en ce qu'**il est prévu une préséparation d'huile et/ou une séparation fine d'huile, celle-ci étant intégrée séparément dans la plaque (5) formant support et reliée fluidiquement à au moins l'un des éléments par la plaque (5) formant support et **en ce que** la plaque (5) formant support a des connexions pour au moins un réservoir (7) d'huile et/ou une cuve de séparation de l'huile.

2. Système (1) compresseur suivant la revendication 1, **caractérisé en ce que** les éléments de l'installation (1) sont disposés sur une face plane de la plaque (5) formant support.

3. Système (1) compresseur suivant la revendication 1, **caractérisé en ce que** les éléments de l'installation (1) sont répartis sur les deux faces planes de la plaque (5) formant support.

4. Système (1) compresseur suivant la revendication 1, **caractérisé en ce que** la plaque (5) formant support est rectangulaire et l'entraînement (2) a une plaque (6) distincte formant support de l'entraînement, la plaque (5) formant support et la plaque (6) formant support de l'entraînement pouvant être reliées entre elles de manière variable par respectivement des surfaces latérales au moyen de trous (8) de fixation.

5. Système (1) compresseur suivant l'une des revendications précédentes,
**caractérisé en ce qu'**il est prévu un dispositif de régulation de la température de l'huile, celui-ci étant intégré séparément dans la plaque (6) formant support de l'entraînement ou étant mis sur celle-ci et étant relié fluidiquement et/ou électriquement à au moins l'un des éléments par la plaque (5) formant support.

6. Système (1) compresseur suivant l'une des revendications précédentes,
**caractérisé en ce qu'**il est prévu un dispositif électronique, qui est intégré dans la plaque (5) formant support et qui est disposé séparément sur la plaque (5) formant support, au moins les liaisons électriques étant intégrées dans la plaque (5) formant support et/ou étant disposées sur la plaque (5) formant support.

7. Système (1) compresseur suivant l'une des revendications précédentes,
**caractérisé en ce qu'**il est intégré un échangeur de chaleur (9), qui peut être fixé de manière amovible mécaniquement à la plaque (5) formant support et /ou du côté arrière à l'entraînement (2).

8. Système (1) compresseur suivant la revendication 7, **caractérisé en ce que** la plaque (5) formant support a un nervurage par lequel la fonction d'un échangeur de chaleur est formé.

9. Système (1) compresseur suivant l'une des revendications précédentes,
**caractérisé en ce que** la plaque (5) formant support forme au point d'assemblage mécanique du compresseur (3) au moins une partie d'un carter du compresseur (3).

10. Système (1) compresseur suivant l'une des revendications précédentes,
**caractérisé en ce que** la plaque (5) formant support a un moyen de liaison pour la réception d'un sécheur d'air ou des parties d'un tel sécheur ou un tel sécheur en soi y est intégré.

11. Système (1) compresseur suivant l'une des revendications précédentes,
**caractérisé en ce que**, sur la plaque (5) formant support, sont disposées des vannes, les vannes comprenant au moins une vanne à pression minimum pour le maintien d'un circuit de fluide de lubrification/refroidissement et/ou au moins une vanne de sécurité.

12. Système (1) compresseur suivant l'une des revendications précédentes,
**caractérisé en ce que** celui-ci comprend un carter, qui enveloppe dans l'ensemble les éléments disposés sur la plaque (5) formant support.

13. Système (1) compresseur suivant l'une des revendications précédentes,
**caractérisé en ce que** des dispositifs électriques sont intégrés dans la plaque (5) formant support.
